# EUROPEAN PATENT APPLICATION

(11) **EP 4 807 339 A1**
(43) Date of publication of application: **16.09.2026**
(21) Application number: 25382239.9
(22) Date of filing: 14.03.2025
(51) Int. Cl.: G01M 13/021, B61L 15/00, G01M 13/04, G01M 17/08, G05B 23/02

(54) **METHOD AND SYSTEM FOR ESTIMATING THE LIFE EXPECTANCY OF A TRAIN DRIVE UNIT**

(71) Applicant: CONSTRUCCIONES Y AUXILIAR DE FERROCARRILES S.A., 20200 Beasain (ES)
(72) Inventor: GALIPIENZO HUGUET, Julio, 20200 Beasain (ES); VANDEKERCKHOVE, Mathias, 20200 Beasain (ES); GONZALEZ MARTINEZ, Xiker, 20200 Beasain (ES)
(74) Representative: Galbaian S.Coop.

(57) **Abstract**

Method and system for estimating the life expectancy of a train drive unit. The method comprises obtaining service working variables of the train drive unit (100), wherein said service working variables are obtained from a repository of data of a remote server including a plurality of service working variables of the train drive unit (100) collected during a real route of a train (10), calculating the life expectancy of the bearings of the gearbox using the service working variables obtained from the repository of data, and obtaining the remaining useful life (RUL) of the train drive unit (100) by deducting from the life expectancy of the bearings of the gearbox the real life consumed by the train drive unit (100).

## Description

### TECHNICAL FIELD

The present invention relates to a method and a system for estimating the life expectancy of a train drive unit, and in particular, a system and method for determining the optimum maintenance interval for the main revision of the train drive unit, based on the calculation of the life expectancy of the bearings of the gearbox of the train drive unit.

### PRIOR ART

Rolling bearings are commonly and widely used components in train drive units. The elements of bearings, such as balls, rollers, or raceways are exposed to multiaxial and non-proportional low and high-cycle fatigue loadings. The fatigue of bearings depends on many factors and variables, such magnitude and direction of the contact forces, the geometry and roughness of the contact surfaces, the kind of material, the operating temperature, applied lubricant, lubrication conditions, rolling speed, and sliding in the contact area. As the degradation of the bearings is in most cases the main limiting factor for the life of the train drive unit, the proper estimation of the fatigue life expectancy of a bearing becomes a crucial task in the design of the unit.

A bearing in a train drive unit will eventually fail, and one of the reasons for failure is the formation of fatigue cracks on the raceways, during operation. So, in addition to the train drive unit design, if the life expectancy or the time remaining for fail, the so called RUL of a bearing, could be accurately predicted, the lifespan of the component could be extended, leading to economic benefits, or alternatively reduced, increasing safety and avoiding an early failure in service, with the consequent impact on the operations. Overall, safety and economic benefits could be achieved.

Systems for determining the remaining useful life RUL of rolling bearings are known in the railway sector, especially for condition monitoring and prediction of bearing related events that may occur in service, such as, for example, failures in gearbox bearings. For this purpose, some of the current systems base their method on the analysis of acceleration signals among other values and aim to identify failure modes with sufficient anticipation, to schedule a replacement of the bearings, avoiding any impact on operations and traffic. In some cases, sensing elements are mounted on the wheelset axleboxes, to monitor the condition of the track or bearings. Similar approaches are used to analyse the condition of the bearings on gearboxes, where in some cases, information can come from sensing elements on the gearbox housing. For example, DE102013225710A1 shows a rail vehicle with an onboard monitoring unit for determining the remaining life of the train drive unit. The monitoring unit comprises a computer unit with ageing models stored in a memory of the onboard monitoring unit that estimates the remaining life of components of the train drive unit fed from data of the train drive unit collected by onboard sensors, so the calculation of the remaining life is isolated performed onboard.

### DISCLOSURE OF THE INVENTION

The object of the invention is to provide a method and a system for estimating the life expectancy of a train drive unit, as defined in the claims.

An aspect of the invention refers to a method for estimating the life expectancy of a train drive unit comprising a motor coupled to a gearbox, the gearbox have an input shaft connected to an output shaft through gears, wherein the input shaft and the output shaft are supported by a plurality of bearings, and wherein the motor provides an input torque to the input shaft for driving the gearbox.

The method comprises:
- obtaining service working variables of the train drive unit,
   o wherein said service working variables are obtained from a repository of data of a remote server including a plurality of service working variables of the train drive unit collected during a real route of a train,
- calculating the life expectancy of the bearings of the gearbox using the service working variables obtained from the repository of data, and
- obtaining the remaining useful life RUL of the train drive unit by deducting from the life expectancy of the bearings of the gearbox, the real life consumed by the train drive unit in running distance or elapsed time.

The proposed method estimates the life expectancy of the bearings with real information coming from the service working variables, collected during a real route of the train, thus, in contrast to most of the current cases where these variables are roughly estimated by the original rolling stock manufacturer, the failure of the train drive unit can be predicted with higher accuracy and anticipation to keep safety, and at the same time increasing the service life of the bearing components.

A cloud remote server containing a repository of data published automatically by the train communication system is used, and the necessary calculations and algorithms according to a bearing degradation model that could be based on ISO standards or others, are executed using cloud remote server computing to obtain the RUL of the train drive unit. As a result, there is no need for a physical hardware onboard the train, nor cable routing elements, signal connexion hubs or onboard computers or processors, to process and execute the calculations to obtain the life expectancy, as for example proposes DE102013225710A1. Thus, the life expectancy of the bearings is calculated using real service data, and the design-phase initial estimated life expectancies, can be calculated with more realistic data to increase the accuracy of the estimations. This opens the possibility to extend the bearings life, if the working regime is less demanding than the initial one. In contrast, if the working regime is more demanding than initially considered, the bearings life expectancy should be reduced, to avoid the risk of an early fatigue failure of the unit.

Another aspect of the invention refers to a system for estimating the life expectancy of a train drive unit comprising:
- at least one train of a group of trains, the train having at least a train drive unit comprising a motor coupled to a gearbox, the gearbox have an input shaft connected to an output shaft through gears, wherein the input shaft and the output shaft are supported by a plurality of bearings, and wherein the motor provides an input torque to the input shaft for driving the gearbox,
- a remote server having a repository of data including service working variables of the train drive unit of the at least one train of the group of trains collected during a real route of the train, and,
- a processing unit for calculating the life expectancy of the bearings of the gearbox, using the service working variables obtained from the repository of data, and obtaining the remaining useful life RUL of the train drive unit by deducting from the life expectancy of the bearings of the gearbox, the real life consumed by the train drive unit.

The life expectancy and the remaining useful life RUL of the train drive unit of the train may be used to establish the life expectancies and the remaining useful life RUL of the other trains of the group of trains. According to this, the proposed system allows to obtain the data from a single train of the group of trains doing a same or similar real route, wherein all the trains of the group have same or similar train drive units, so determining the life expectancies and the RUL of the train drive unit of said single train, makes also possible to establish the life expectancies and RUL of the train drive units of the other trains running the same service and track without requiring having data from all the trains, thus requiring less power consumption to perform calculations and maintain the repository of data.

### DESCRIPTION OF THE DRAWINGS

Figure 1 shows an example of one wagon of a train having train drive units for powering the wheels of the train.
Figure 2 shows a train drive unit of figure 1.
Figure 3 shows an example of a system for estimating the remaining useful life RUL of a train drive unit according to the invention.
Figure 4 shows a process to obtain the load spectrum, obtained from the service working variables, that is used for determining the loads of the bearings of the train drive unit.
Figure 5 is a scheme showing the updating of the overhaul after calculating the RUL according to the real service working variables.

### DETAILED DISCLOSURE OF THE INVENTION

The present invention relates to a method for estimating the life expectancy of a train drive unit 100 of a train 10. Said life expectancy may be used to obtain the remaining useful life of the train drive unit. The RUL of the train drive unit may be defined as the remaining distance that the train may travel before the train drive unit needs to be repaired for avoiding a failure. According to the invention, the life expectancy and RUL is calculated in distance units, as for example kilometres, but may also be calculated in other units, as for example time units, like hours, or in cycles, which is the number of turns made by a wheel of the train or other component of the train drive unit that drives the wheel.

Generally, the train drive unit is repaired in a preprogrammed maintenance action called overhaul wherein the bearings of the train drive unit are replaced, among others. The overhaul is usually established in the design phase of the train drive unit before the train entering in service. The overhaul is the most expensive and time-consuming maintenance action of the train, as it requires the complete disassembly, refurbishment and reassembly of the gearbox, and usually only a single overhaul is performed during the whole life of the train, thus extending the life of the train drive unit to avoid the overhaul could lead in a significant reduction of cost. In contrast, reducing the overhaul when service working demands overcome the design values of the bearings helps to maintain the safety and resiliency levels of the transmission unit, avoiding unexpected early fails. Thus, the present invention also proposes to update the overhaul according to the calculated life expectancy of the train drive unit 100.

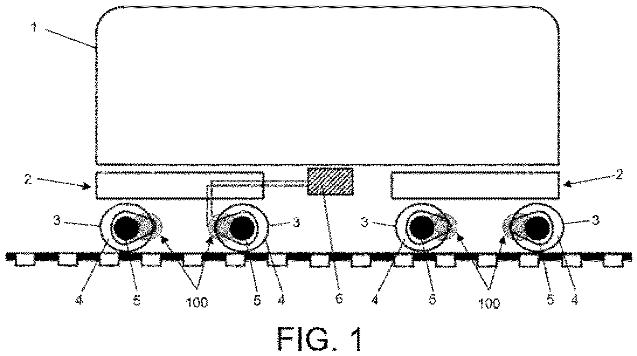

Figure 1 shows an example of a wagon 1 of a train having two or more bogies 2. A bogie 2 may be connected to the chassis of the wagon 1 with mechanical supports that provide relative vertical and lateral displacements and rotating capacity around a vertical axis. Additionally, the wagon 1 may have suspension elements to provide comfort. Preferably, each bogie 2 may have two or more wheelsets 3, each wheelset 3 comprising two wheels 4 joined by an axle 5. The bogie 2 may have a bogie frame which is a structure connected to the wagon 1 that holds the wheels 4, the train drive unit 100, braking system and primary and secondary suspension and is responsible for guiding and supporting the wagon 1 through the rails of the track. Some trains do not have bogies for supporting the wagon, and alternatively, the wagons 1 may have independent wheelsets 3 or may have independent wheels 4 without axle, as for example in low floor light rail vehicles or tramways. The wagon 1 may also be equipped with powered or trailing axles.

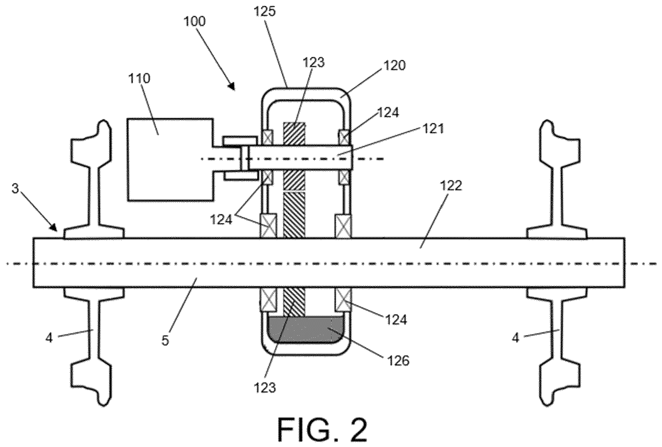

According to the example of figures 1 and 2, the axle 5 of a wheelset 3 is driven with a train drive unit 100 fed with a power device 6, such as a power inverter that generates an electric signal to feed the train drive unit 100.

As can be shown in said example of figure 2, a train drive unit 100 comprises a motor 110 coupled to a gearbox 120. The gearbox 120 have an input shaft 121 connected to an output shaft 122 through gears 123, and the input shaft 121 and the output shaft 122 are supported by a plurality of bearings 124. The gearbox 120 of the train drive unit 100 has a housing 125 with an oil sump 126 having oil for lubricating the gears 123 and the bearings 124..

Motor 110 provides an input torque T to the input shaft 121 for driving the gearbox 120. Motor 110 may be an electric motor 110, arranged on the wagon 1 or bogie frame, that receives an electric signal from the power device 6 to generate the input torque.

Figure 2 shows a non-limitative example of a train drive unit 100 but other configurations are possible. For example, figure 2 shows an output shaft 122 of the gearbox which is the axle 5 of the wheelset 3, in the so called semisuspended gearbox configuration. In other configurations, the output shaft 122 of the gearbox is a shorter and hollow secondary axle 5 supporting the wheels 4 passing through it, enabling radial and lateral relative displacement, between gearbox and secondary axle 5. Torsional torque is transmitted by means of a torsional coupling, connecting the gearbox 100 output shaft with the secondary axle 5. This is called the fully suspended gearbox configuration, where the motor 110 and gearbox 100 are rigidly fixed to the bogie 2 and requires a relative radial and lateral movement respect to the wheelset. Another configuration may be found in low floor railways like trams and light rail vehicles (LRV), where in order to allow the wagon internal floor to get closer to the track level, the output shaft 122 is shorter and hollow, and a coupling providing relative displacement is mounted and passing through the hollow tunnel of the output shaft 122, so each wheel is supported onto a shaft 122 by bearing sets, moving independently from the other wheels. This is another fully suspended configuration for low floor railway applications.

The invention proposes a method for estimating the life expectancy of a train drive unit 100 of a train 10. The method comprises:
- obtaining service working variables of the train drive unit 100,
- calculating the life expectancy of the bearings 124 of the gearbox 120 using the service working variables, and
- obtaining the remaining useful life RUL of the train drive unit 100 by deducting from the life expectancy of the bearings 124 of the gearbox 120 the real life consumed by the train drive unit 100.

Accordingly, the RUL may be obtained using the following expression: $RUL = life expectancy - real life consumed$

Preferably, the values of the above expression may be distance units, like kilometers, but may be also time units, like hours, or cycles N, which may be the number of turns made by the input shaft 121 of the train drive unit 100.

Preferably, the life expectancies of the bearings 124 of the gearbox 120 are compared among them to obtain the bearing 124 having the less life expectancy, and the remaining useful life RUL of the train drive unit 100 is obtained by deducting from the life expectancy of the bearing 124 having the less life expectancy, the real life consumed by the train drive unit 100. Accordingly, the RUL may be obtained using the following expression: $RUL = life expectancy of the bearing having less life expectancy - real life consumed$

According to the invention, the service working variables are obtained from a repository of data of a remote server including a plurality of service working variables of the train drive unit 100 collected during a real route of a train 10, so the life expectancy of the bearings 124 of the gearbox 120 is calculated using said service working variables obtained from the repository of data of the remote server. For example, said service working variables may be collected by train onboard sensors and sent from the train communication system of train 10 to the repository of data of the remote server. The service working variables may be periodically published by the train communication system on a remote cloud-based server, that works as a "data pool" or "data lake" having a repository of raw data of the train 10.

Preferably, the real life consumed by the train drive unit 100 is obtained from the service working variables included in the repository of data, and the life of the train drive unit 100 is expressed in distance units, time units or number of cycles N, where the number of cycles is the number of turns of the input shaft 121 of the train drive unit 100. So, the real life consumed may be the distance travelled by the train 10 or the time that the train 10 has been on movement, or the number of turns that the input shaft 121 has made while the train 10 has been on movement. The real life consumed may be directly included in the repository of data or may be estimated from other values included in the repository of data. For example, the service working variables may comprises a plurality of values of the speed of the train 10 collected during the real route of a train 10, so the real life consumed by the train drive unit 10 is obtained from the speed of the train 10.

Preferably, a plurality of values of the input torque T provided to the input shaft 121 and a plurality of values of angular input speed "n" of the input shaft 121 are obtained from the service working variables included in the repository of data. Said values may be directly included in the repository of data or may be indirectly estimated from other values included in the repository of data. Said values preferably are obtained from a constant sampling period.

More preferably, the service working variables of the repository of data comprise tractive effort values collected during the real route of a train 10, said tractive effort values are applied on at least one wheel 4 driven by the train drive unit 100, and the values of the input torque T of the input shaft 121 are estimated from said tractive effort values. For example, the input torque T may be indirectly estimated from the electric signal provided by the power device 6 to the electric motor 110. Accordingly, the current provided by the power device 6 to the electric motor 110 is converted into an equivalent torque value and then this equivalent torque value is converted into linear forces on the wheel, which are the tractive effort values applied on the wheel 4. These tractive effort values are obtained on board and the train communication system periodically send these values to the repository of data of the remote server.

Even though the values of the input torque T may be estimated from the electric signal provided by the power device 6 to the electric motor 110 without requesting using additional sensors, alternatively, a direct measurement can be obtained from a torque sensor located at the most convenient place along the train drive unit 100, or a force cell mounted on the gearbox reaction rod or its fixation to the bogie frame. For example, said torque sensor may be arranged on the input shaft 121 to directly measure the input torque T or may be arranged on the motor 110 or other part of the drivetrain of the gearbox 120, as for example, the gears or the output shaft, for indirectly estimate the input torque.

Preferably, the repository of data further comprises a plurality of values of the speed of the train 10 collected during the real route of a train 10, thus the values of angular input speed n of the input shaft 121 are obtained from said values of the speed of the train 10. For example, the speed of the train 10 is measured with a phonic wheel comprising a disc with grooves coupled to the motor 110 or coupled to a wheel 4 of the train 10 and an electronic sensor configured for detecting the grooves of the disc and establish the number of turns of the motor 110 or the number of turns of the wheel 4 during a predefined time. The phonic wheel may estimate the speed of the train in view of the radius of the wheels.

Alternatively, the values of the angular input speed "n" of the input shaft 121 may be also estimated from the electric signal provided by the power device 6 to the electric motor 110 or even measured using a speed sensor in the most convenient place of the drivetrain, however, it is preferable to use the phonic wheel, because if the train slips, there would be an incongruence between the rotation of the shaft of the train drive unit 100 and the train speed.

Accordingly, the service working variables included in the repository of data may comprise the real life consumed by the train drive unit 100, values of the input torque T provided to the input shaft 121 and values of angular input speed "n" of the input shaft 121, and/or may comprise other values for indirectly estimate the real life consumed by the train drive unit 100, the input torque T and the angular input speed "n".

More preferably, values of acceleration of at least one point of the train drive unit 100, or a wheelset axlebox, are additionally obtained from the service working variables included in the repository of data.

Values of acceleration may comprise vertical, lateral and longitudinal accelerations. Said values may be obtained from accelerometers arranged on the housing 125 of the gearbox 120 or on an axlebox that connects the wheelset 3 to the bogie frame.

Even more preferably, values of the oil quality of oil contained in an oil sump 126 of the gearbox 120 are additionally obtained from the service working variables included in the repository of data.

Values of the oil quality may be obtained by oil quality sensors that can be mounted on the housing 125 of the gearbox 120 with an access to the oil sump 126 inside the gearbox 120. Said oil quality sensors may use the particle counting capacity or another representative variable to determine the oil quality, general status or contamination level. Said oil quality sensors may monitor oil health variables such as oil temperature, oil viscosity, oil acidity, particle content within the oil and/or content of water in the oil. Particle content within the oil may comprises metallic particles, like for example, iron, copper, aluminium, chromium, lead, tin, nickel, and silicon. The oil quality sensors may measure particle size and quantity (ISO code 4406/99) within the oil, particles per million of additive contents, particles per million of wear metals and contaminants and PQ index.

Accordingly, the service working variables included in the repository of data may additionally comprise values of acceleration of at least one point of the train drive unit 100 and values of the oil quality of the oil contained in the oil sump 126, and/or may comprise other values for indirectly estimate the values of acceleration and the values of the oil quality.

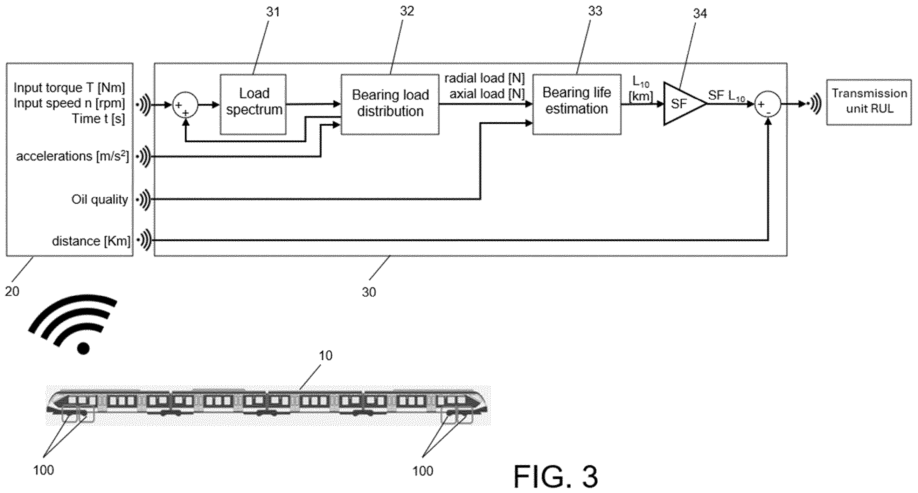

Figure 3 shows an example of a system for estimating the remaining useful life RUL of a train drive unit according to the invention.

The system comprises:
- at least one train 10 of a group of trains 10, each train 10 having at least a train drive unit 100 as described above,
- a remote server 20 having a repository of data including service working variables of the train drive unit 100 of the at least one train 10 of the group of trains 10 collected during a real route of the train 10, and,
- a processing unit 30 for calculating the life expectancy of the bearings 124 of the gearbox 120 of the at least one train 10 using the service working variables obtained from the repository of data, and obtaining the remaining useful life RUL of the train drive unit 100 by deducting from the life expectancy of the bearings 124 of the gearbox 120 the real life consumed by the train drive unit 100.

Preferably, the group of trains 10 do a same real route and the train drive units 100 of all the trains 10 are the same train drive units 100 having same gearboxes 120, thus it is only necessary to collect data from one train 10 in order to estimate the remaining useful life RUL of all the train drive units 100 of all of the trains 10. This means that gearboxes 120 have the same configuration with same shafts 121 and 122, gears 123, and bearings 124.

Life expectancy LE of the bearings 124 of the gearbox 120 are calculated on a remote server using a bearing degradation model that may have different ageing algorithms. Said bearing degradation model may be any suitable model reported in literature for calculating the life expectancy of the bearings. The remote server having the processing unit 30 for calculating the expectancy of the bearings 124 may be the remote server 20 having the repository of data or may be a different remote server.

The processing unit 30 comprises a load spectrum generating block 31, a bearing load distribution block 32, a bearing life estimation block 33, and a safety factor block 34.

The load spectrum generating block 31 receives data from the repository of data for obtaining a load spectrum. The load spectrum is the result of determining a percentage of lifetime of the train drive unit 100, running at a specific range of input torques T and angular input speeds n of the input shaft 121. This calculation is executed using the called extended-counting method, according to the literature. The extended-counting method starts from a set of data, providing input torque T and angular input speed n of the input shaft 121 at each timeframe, with a total number of "n" timeframes. The time between timeframes should be fixed. A timeframe corresponds to the instant of time when a sample of the service working variables is collected and made available in the repository of data. Said timeframes preferably are obtained according to a constant sampling period.

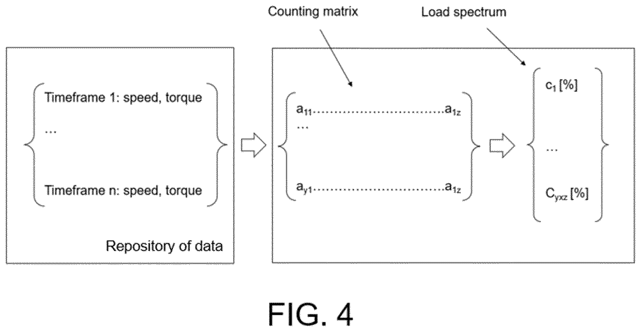

As shown in figure 4, with said set of data, the extended-counting method creates a counting matrix with a number of rows "y" and a number of columns "z", where the number of rows "y" are input shaft torque ranges, and where the number of columns "z" are angular input speed ranges of the input shaft 121. Said number of rows "y" is defined in advance and can range from 10 to 1000 and said number of columns "z" is also defined in advance and can range from 4 to 40. Then the extended-counting method translates to the counting matrix (having a size "y" X "z") the number of repetitions of timeframes taking place in each torque and speed ranges.

Finally, the counting matrix is translated into the load spectrum, which is an array of data, delivered to block 32. The size of this load spectrum is "y" X "z", and each element in the array is the percentage (Ci[%]) of the lifetime of the gearbox 120, running at a specific range of input torques T and angular input speeds n of the input shaft 121.

Block 32 properly converts the load spectrum into reaction forces on the bearings, enabling block 33 to execute the life estimation algorithms.

Bearing load distribution block 32 receives the load spectrum generated in block 31 to translate the load spectrum into radial and axial reaction loads at each bearing 124 of the gearbox 120 and said radial and axial loads are sent to the bearing life estimation block 33 to obtain the life expectancy L₁₀ of each bearing 124, by running an ageing algorithm that can be based on ISO standards or a different algorithm. Block 33 is responsible for selecting the limiting bearing 124 of the whole assembly, thus, driving the overall life expectancy of the gearbox 120. Said life expectancy could be increased by multiplying it by a safety factor on block 34. Later, the current distance travelled by the train 10 is deducted from the life expectancy of the bearings 124 of the gearbox 120 obtained in block 34 for obtaining the remaining useful life RUL of the train drive unit 100.

L₁₀ life expectancy may represent the travel distance or the working time, that a bearing 124 may achieve before it reaches to its fatigue life end, which normally considers the occurrence of the first signs of flaking on the raceways or the rolling elements.

Bearing load distribution block 32 may comprise a structural calculation model having the real geometry and configuration of the gearbox 120. The structural calculation model may comprise information of the material properties of the components of the gearbox 120 and detailed geometry of the bearings 124 gears 123 and shafts 121 and 122.

For example, the structural calculation model may have:
- number of gears, teeth macro and microgeometry,
- position of the gears within the gearbox
- rotating shaft dimensions
- external constraints or hypotheses
- bearing references and locations (including bearing detailed geometry, balls and raceways)
- material of each component of the gearbox,
- bearing clearances.

Bearing load distribution block 32 may also receive values of acceleration of the gearbox 120 in order to more precisely calculate the radial and axial loads of the bearings 124. For example, accelerations measured by sensors on the gearbox housing 125 or on the axlebox may be taken into consideration as said values may be representative of the status of the wheel 4 or rail condition, that can alter the loads on the bearings 124 and affect their life expectancy.

Structural calculation model may use algorithms for calculating the radial and axial load of bearings as described in ISO standard ISO/TS 16281 *"Rolling bearings - Methods for calculating the modified reference rating life for universally loaded rolling bearings".* The algorithms of the structural calculation model according to ISO standards may be selected depending on the accuracy required to the radial and axial loads.

Bearing life estimation block 33 may comprise a life calculation model that receives the radial and axial loads from block 32 and obtains the life expectancy L₁₀ of each bearing 124. Block 33 may compare the life expectancy of all the bearings 124 of the gearbox to obtain the bearing 124 having the less life expectancy.

Preferably, bearing life estimation block 33 may also receive values of the oil quality of oil contained in the oil sump 126 of the gearbox 120 in order to calculate a modified life expectancy according to ISO 281.

The life calculation model of block 33 may use algorithms for calculating the life expectancy as described in ISO standard ISO/TS 16281 *"Rolling bearings - Methods for calculating the modified reference rating life for universally loaded rolling bearings"* or ISO 281 *"Rolling bearings - Dynamic load ratings and rating life".* Block 33 may comprise information about the diameter of the wheel 4 and bearing associated variables and tables as per provided in ISO 281 or ISO/TS 16281.

Safety factor block 34 adds a safety factor to the life expectancy L₁₀ obtained in the bearing life estimation block 33.

For example, models of block 32 and 33 may be KISSsoft^{®} modular calculation software which obtain expectancy life of bearings taking into account internal geometry according to ISO standards. In any case, any suitable bearing degradation model reported in literature may be used in blocks 32 and 33.

A specific interface may be enabled, to allow users access the RUL of the unit 100, using different terminal types, like laptop, PC, tablet, phone.

Preferably, a default overhaul interval OVH(to) for replacing at least one bearing 125 of the train drive unit 100 is preprogrammed according to a predefined life expectancy LE(to) of the train drive unit 100 and the method further comprises obtaining a new overhaul interval OVH(t1) according to the life expectancy LE(t1) of the bearings 124 of the gearbox 120 calculated using the service working variables, and comparing the new overhaul interval OVH(t1) with the default overhaul interval OVH (to) to extend, reduce, or maintain the default overhaul interval OVH (to). According to this, the new overhaul interval OVH(t1) is greater than default overhaul interval OVH(to) if the service working variables are less demanding than the predefined life expectancy LE(to) and the new overhaul interval OVH(t1) is shorter than default overhaul interval OVH(to) if the service working variables are more demanding than the predefined life expectancy LE(to).

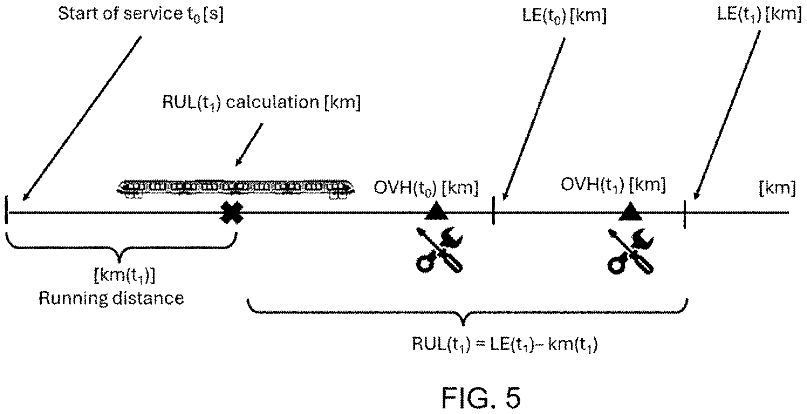

Figure 5 shows an example of a first RUL(t1) calculation when the train 10 has traveled a first running distance t1 in order to establish a new overhaul interval OVH(t1).

The remaining useful life RUL, and the overhaul interval OVH, may be periodically calculated at different running distances of the train 10 to update the overhaul interval OVH according to the real service working variables collected until each running distance of the train 10.

The predefined life expectancy LE(to) for preprogramming the default overhaul interval OVH(to) may be obtained before the start of service t₀ of the train 10 and said predefined life expectancy LE(to) may be calculated from initial estimated service variables according to the real route to be done by the train 10, that could be provided in the project development phase by the rolling stock manufacturer. In many cases, trains operate in different track circuits or in new operations, thus, these initial service variables should be estimated in most cases. The predefined life expectancy LE(to) may be calculated with the processing unit 30 but using the initial estimated service variables instead of the real service working variables because no real data exists before the start of service of the train. This means that the load spectrum may be obtained using the initial estimated service variables. Note that the predefined life expectancy LE(to) is equal to RUL(t0) when no safety factor SF is applied, but after applying the safety factor SF of block 34, the predefined life expectancy LE(to) is greater than RUL(t0), to be conservative and avoid an early bearing failure.

At the start of service to, RUL(to) is equal to the predefined life expectancy LE(to) and for security reasons the default overhaul interval OVH(to) may be established at an interval of time, distance, or cycles, before reaching said predefined life expectancy LE(to). Later, when train 10 has traveled the first running distance t1, and real service working variables are available, the first RUL(t1) calculation is executed and the new overhaul interval OVH(t1) is established. The new overhaul interval OVH(t1) may be established at an interval of time, distance, or cycles, before reaching the life expectancy LE(t1) calculated at the first running distance t1.

Finally, said new overhaul interval OVH(t1) may be compared with the default overhaul interval OVH(to) to decide if extend, reduce or maintain the default overhaul interval OVH(to). Several RUL calculations loops may be done during time to periodically update the overhaul interval OVH with additional information from service.

In the system described before for estimating the life expectancy of a train drive unit comprising at least on train 10 of a group of trains 10, the new overhaul interval OVH(t1) of the train drive unit 100 of said train 10 of the group of trains 10, is used to establish new overhaul intervals OVH(t1) of the other trains 10 of the group of trains 10. Thus, only data of one train of the group of trains is required for establishing the overhaul of all the trains of the group.

## Claims

1. **Method** for estimating the life expectancy of a train drive unit (100) comprising a motor (110) coupled to a gearbox (120), the gearbox (120) having an input shaft (121) connected to an output shaft (122) through gears (123), wherein the input shaft (121) and the output shaft (122) are supported by a plurality of bearings (124), and wherein the motor (110) provides an input torque (T) to the input shaft (121) for driving the gearbox (120), the method comprising:
- obtaining service working variables of the train drive unit (100),
o wherein said service working variables are obtained from a repository of data of a remote server including a plurality of service working variables of the train drive unit (100) collected during a real route of a train (10),
- calculating the life expectancy (LE) of the bearings (124) of the gearbox (120) using the service working variables obtained from the repository of data, and
- obtaining the remaining useful life (RUL) of the train drive unit (100) by deducting from the life expectancy (LE) of the bearings (124) of the gearbox (120) the real life consumed by the train drive unit (100).

2. Method according to claim 1, wherein the real life consumed by the train drive unit (100) is obtained from the service working variables included in the repository of data, and the life of the train drive unit (100) is expressed in distance units, time units or number of cycles (N), where the number of cycles is the number of turns of the input shaft (121) of the train drive unit (100).

3. Method according to claim 1 or 2, wherein a plurality of values of the input torque (T) provided to the input shaft (121) and a plurality of values of angular input speed (n) of the input shaft (121) are obtained from the service working variables included in the repository of data, said values preferably being obtained from a constant sampling period.

4. Method according to claim 3, wherein the service working variables of the repository of data comprises tractive effort values collected during the real route of a train (10), said tractive effort values being applied on at least one wheel (4) driven by the train drive unit (100), and the values of the input torque (T) of the input shaft (121) being estimated from said tractive effort values.

5. Method according to claim 3 or 4, wherein the repository of data further comprises a plurality of values of the speed of the train (10) collected during the real route of a train (10), thus the values of angular input speed (n) of the input shaft (121) are obtained from said values of the speed of the train (10).

6. Method according to claim 5, wherein the speed of the train (10) is measured with a phonic wheel comprising a disc with grooves coupled to the motor (110) or coupled to a wheel (4) of the train (10), and an electronic sensor configured for detecting the movement of the grooves and establishing the number of turns of the motor (110) or the number of turns of the wheel (4) during a predefined time.

7. Method according to any of the preceding claims, wherein values of acceleration of at least one point of the train drive unit (100), or a wheelset axlebox, are additionally obtained from the service working variables included in the repository of data.

8. Method according to any of the preceding claims, wherein values of the oil quality of oil contained in an oil sump (126) of the gearbox (120) are additionally obtained from the service working variables included in the repository of data, the values of the oil quality preferably comprising oil temperature, oil viscosity, oil acidity, particle content within the oil, and/or content of water in the oil.

9. Method according to any of claims 3 to 8, wherein a load spectrum is obtained from the values of the input torque (T) and the values of the angular input speed (n) collected during the real route of the train (10), said load spectrum being the result of determining a percentage of lifetime of the train drive unit (100), running at a specific range of input torques (T) and angular input speeds (n) of the input shaft (121).

10. Method according to any of the preceding claims, wherein the service working variables are obtained on the train (10) and sent from a train communication system of the train (10) to the repository of data of the remote server.

11. Method according to any of the preceding claims, wherein the life expectancies (LE) of the bearings (124) of the gearbox (120) are compared among them to obtain the bearing (124) having the less life expectancy, and the remaining useful life (RUL) of the train drive unit (100) is obtained by deducting from the life expectancy (LE) of the bearing (124) having the less life expectancy the real life consumed by the train drive unit (100).

12. Method according to any of the preceding claims, wherein a default overhaul interval (OVH to) for replacing at least one bearing (125) of the train drive unit (100) is preprogrammed according to a predefined life expectancy (LE to) of the train drive unit (100), and the method further comprises obtaining a new overhaul interval (OVH t1) according to the life expectancy (LE t1) of the bearings (124) of the gearbox (120) calculated using the service working variables, and comparing the new overhaul interval (OVH t1) with the default overhaul interval (OVH to) to extend, reduce, or maintain the default overhaul interval (OVH to).

13. Method according to any of the preceding claims, wherein the life expectancy of the bearings (124) of the gearbox (120) are calculated in a remote server with a bearing degradation model.

14. System for estimating the life expectancy of a train drive unit (100), the system comprising:
- at least one train (10) of a group of trains (10), each train (10) having at least a train drive unit (100) comprising a motor (110) coupled to a gearbox (120), the gearbox (120) have an input shaft (121) connected to an output shaft (122) through gears (123), wherein the input shaft (121) and the output shaft (122) are supported by a plurality of bearings (124), and wherein the motor (110) provides an input torque (T) to the input shaft (121) for driving the gearbox (120),
- a remote server (20) having a repository of data including service working variables of the train drive unit (100) of the at least one train (10) of the group of trains (10) collected during a real route of the train (10), and
- a processing unit (30) for calculating the life expectancy (LE) of the bearings (124) of the gearbox (120) of the at least one train (10) using the service working variables obtained from the repository of data, and obtaining the remaining useful life (RUL) of the train drive unit (100) by deducting from the life expectancy (LE) of the bearings (124) of the gearbox (120) the real life consumed by the train drive unit (100).

15. System according to claim 14, wherein the remaining useful life (RUL) of the train drive unit (100) of the train (10) is used to establish the remaining useful life (RUL) of the other trains (10) of the group of trains (10).
